# EUROPEAN PATENT SPECIFICATION

(11) **EP 3 728 894 B1**
(45) Date of publication and mention of the grant of the patent: **01.12.2021**
(21) Application number: 18830514.8
(22) Date of filing: 17.12.2018
(51) Int. Cl.: F16G 1/28, F16G 3/02, F16G 3/10, F16G 5/20, B29D 29/08

(54) **METHOD FOR JOINING BELTS**
VERFAHREN ZUM VERBINDEN VON BÄNDERN
PROCÉDÉ D'ASSEMBLAGE DE COURROIES

(30) Priority: 20.12.2017 IT 201700146972
(43) Date of publication of application: 28.10.2020
(73) Proprietor: Plastorgomma S.R.L., 41042 Fiorano Modenese (MO) (IT)
(72) Inventor: LUSVARDI, Silvano, 41049 Sassuolo (Modena) (IT); MARCHIONI, Aurelio, 41049 Sassuolo (Modena) (IT)
(74) Representative: Gianelli, Luca
(86) International application number: PCT/IB2018/001435
(87) International publication number: WO 2019/122996

(56) References cited:
- EP-A1- 2 644 938
- DE-U1-202012 102 608

## Description

The object of the present invention is a method for joining belts. In particolar, it is intended to obtain a loop joint in flat or trapezoidal, toothed transmission or transport belts according to a predetermined length.

It is well known to realize a loop joint in toothed or flat belts frequently made of polyurethane or rubber, by size, i.e. "tailored", with the aid of pins of metal or other materials. The known technique involves housing the pins in the body of the belt, in transverse holes previously drilled, using special machines. These holes are, in fact, obtained in the thickness of the belt in a transverse direction, i.e. perpendicular to the longitudinal direction, which is the one along which the traction is exerted, on the same belt.

In order to make the connection, the two ends of the belts to be joined are die-cut so as to obtain protruding portions and indentations in one that are complementary with protruding portions and indentations in the other, so as to be longitudinally connected by interlocking according to a pre-established pattern.

Once the flat interlocking coupling has been completed, transverse drilling is carried out in the thickness, at least in the joint section intended for the insertion of the pins. This known technology for an interlocking joints produces a valid union between the two ends, but involves the use of a relatively complicated processing cycle, especially for the part concerning the drilling process used to obtain the transverse holes in which to insert the pins. In fact, the working cycle is relatively long and delicate, requiring the use of high quality twist drills, usually cooled by cold air, and which, in many cases, are required to drill deep holes, due to a high length/diameter ratio. Due to the difficulty of the operation, frequent breakages can occur, which inevitably lead to lengthening of the working cycle. Document EP 2 644 938 shows a method for joining the ends of belts through holes (7) provided at least in the region of the junction area for housing suitable reinforcing pins (21).

The main purpose of this invention is to overcome the limitations and disadvantages mentioned above, and those deriving therefrom, providing a method for joining the ends of belts, whose ends to be joined have transverse channels or hollow seats, , on at least one side, using these channels or transverse hollow seats to create a sort of reinforcement by inserting pins into them without proceeding to the realization of the seats of the pins through specific transversal drilling of the belts.

The invention therefore has the advantage of facilitating and simplifying the joining operation by significantly reducing the time of the working cycle.

This also allows for faster and easier assembly and replacement of the belts during ordinary and extraordinary maintenance operations. In addition, this allows on site operation with the sole aid of an easily transportable cutting tool, which is suitable for cutting the ends of the belt to be joined.

These and other objects and advantages are obtained by the present invention as described, illustrated in the enclosed drawings and claimed hereinafter.

The characteristics of the present invention will become more evident from the following description of some of its preferred embodiments illustrated by way of not limiting example with the help of the enclosed figures, in which:

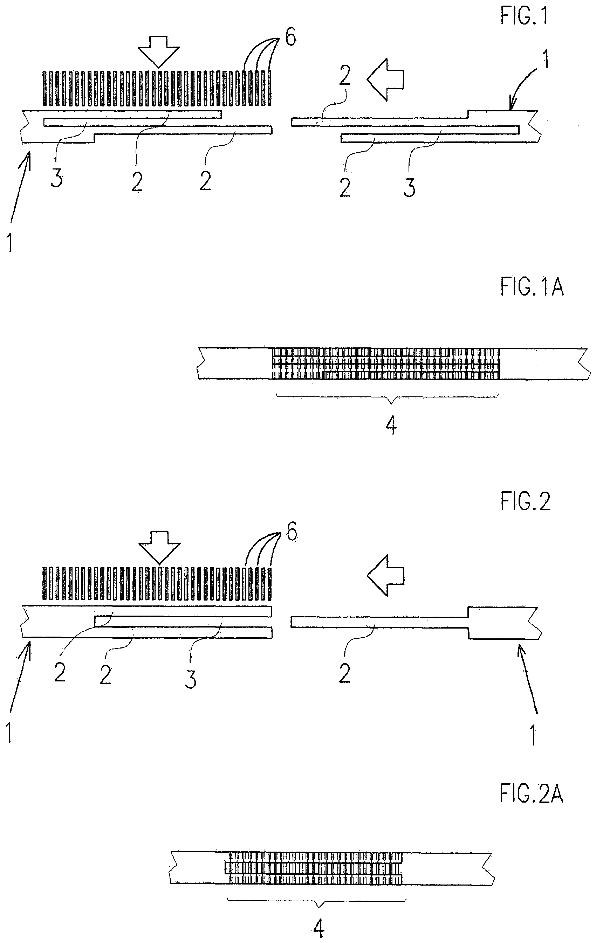

- Figure 1 shows a schematic plan view of a first step of a first embodiment of the joint;
- Figure 1A shows a schematic plan view relative to a subsequent step of the joint in the embodiment of Figure, 1 in its final configuration;
- Figure 2 shows a schematic plan view of a first step of a junction relating to a second embodiment;
- Figure 2A shows a schematic plan view relative to a subsequent step of the joint of the second embodiment, in its final configuration;
- Figure 3 shows an example of a closed loop belt in which the connection of the two ends of the belt is made according to the invention;
- Figure 4 shows, in greater scale, a detail of Figure 3 represented according to a longitudinal section at the junction;
- Figure 5 shows, in enlarged scale, a detail highlighted in Figure 3, which is represented in longitudinal section of the belt at the joint made according to the invention, but concerning another embodiment of the invention related to a flat belt.

With reference to the above figures, numeral 1 indicates a belt made of polyurethane or rubber or other material used for the manufacture of flat, toothed or trapezoidal transmission or transport belts. These belts must normally be shaped in a loop to make the mechanical means for the transmission. This is why, starting from a belt segment, obtained, for example, by extrusion, the two ends to be joined must be joined by a head joint in order to obtain the desired size of the loop belt.

In particolar, the method in question provides the head joint of a belt whose ends to be joined have transverse holes 5 on at least one matching side, prepared for precise housing of pins 6 for strengthening the joint,

These transverse holes 5 are arranged along the entire length of the belt and, in addition to being generated directly and at the same time as the extrusion moulding operation of the belt, in its final configuration, can be formed advantageously by using a common toothed belt 8 on a toothed side of which a closing band or belt 7 is firmly arranged and coupled in a stable manner, e.g. by bonding or melting, with the task of covering the grooves between the teeth of the toothed belt 5, thus forming a plurality of transversal holes. These latter are designed to receive suitable pins 6 thereinside, these pins being arranged along a junction area 4 of the belt 1.

The complete method aimed at realizing the joining of belts briefly includes:
- creation of several transverse holes 5 by means of the stable application of a closing band 7 on the side of a toothed belt 8 that covers the grooves among the teeth, to create transverse holes 5 having dimensions for and used to house the reinforcing pins 6, at least in correspondence of a junction zone 4;
- cutting the belt into shaped projecting belt portions 2 at both ends to be joined, so arranged that the externally projecting portions 2 of one belt are suitably accommodated into corresponding recesses 3 included between the projecting portions of the other one, so as to form a sort of longitudinal interlock thus defining a junction area or region 4 with predetermined length; while coupling the externally projecting portions of the two ends, the individual transversal holes 5 are aligned along the entire width of said junction area or region 4;
- introducing a pin 6 into each one of said transverse holes 5, in correspondence with the junction area 4;

The head joint 4 can be made using a toothed belt 8 of commercial type, or obtained by extruding a belt with an *ad hoc* toothing, for example, made up of a kind of toothed impression or hollow seats or transversal compartments arranged in any case on the back, i.e. on the side opposite to the "active" side of the toothed belt 8 itself; this can be made by using the same extrusion techniques that are usually used for the production of flat or toothed belts.

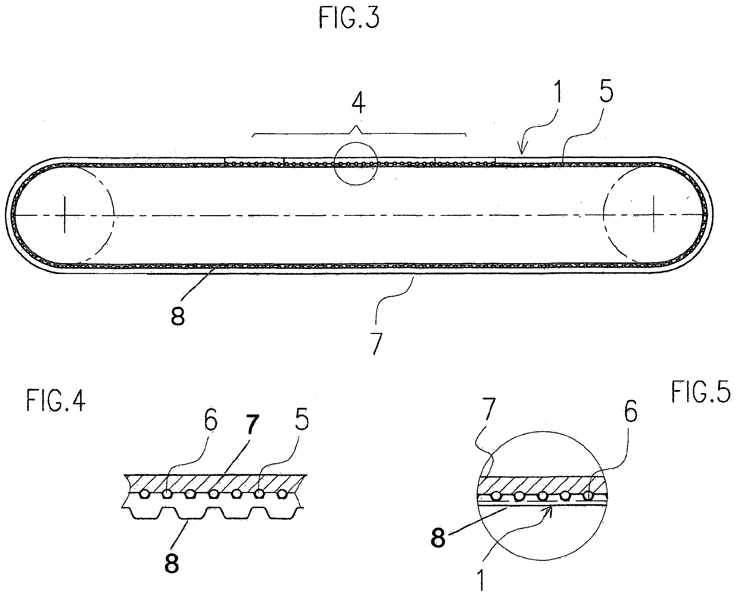

The toothed belt 8 can also be provided with an active toothing on the active side, opposite to the one bearing the toothed impression or toothing, the active toothing being oriented in the direction mentioned above, as shown in Figure 4, thus obtaining a double toothed belt, i.e. also equipped on the active side with a toothing, but functional for meshing with a toothed pulley.

According to the invention, the "die-cutting" of the two ends of the belt to be joined is then carried out by cutting the belt into shaped projecting belt portions 2 at both ends to be joined. These externally projecting belt portions 2 are so arranged that the externally projecting portions 2 of one belt are suitably accommodated into corresponding recesses 3 included between the projecting portions of the other one, so as to form a sort of longitudinal interlock thus defining a junction area or region 4 with predetermined length.

The individual transverse holes or hollow seats 5, are aligned for at least the entire width of the junction area or region 4 and are arranged evenly spaced.

Their cross section is so shaped as to accommodate the individual pins 6 that are inserted neatly inside them.

Once the pins 6 have been inserted or placed within the respective holes 5, a closing band 7 shall be firmly applied to the back, i.e. to the side of the belt 1 bearing the transverse holes 5 in which the pins 6 are housed, so that the band covers them and solidly incorporates the pins 6.

The closing band 7 is made of elastomeric materials, rubber or similar materials, with mechanical characteristics of deformability and elasticity compatible with those of the toothed belts 8 to which the band is coupled.

The joint can therefore be very simply made up of a commercial toothed belt 8, that is suitably overturned so as to close the toothed side with a closing band 7 which is itself made up of a flat belt. In this case the belt resulting from the coupling becomes a flat belt.

Using a belt 8 bearing teeth on both sides (see Figure 4) i.e. if the active side of the belt is also toothed, the invention allows creation of toothed belt joints.

The strength of the joint can then be further increased by subjecting at least the area of the joint 4 itself to a pressing action at a predetermined temperature, once the closing band 7 that closes the transverse holes 5 in which the pins 6 are housed has been firmly applied. This final operation, followed by a due cooling, has the purpose of bringing the material of which the joint is made to a softening or partial melting temperature, so as to compact the pins inside the housings in which they are inserted to achieve complete adhesion to the material in which they are completely embedded. The ends with which the joint 4 is to be made consist of shaped protruding portions of belts 2 which are made in a complementary way also with different lengths, and in any case such as to achieve a coupling in which the externally projecting portions 2 of one belt are suitably accommodated into corresponding recesses 3 included between the projecting portions 2 of the other belt, so as to form a sort of longitudinal interlock thus defining the junction area or region 4.

The individual transverse holes 5 are in any case arranged parallel to each other and sized to accommodate the pins 6.

The invention, in addition to the advantages already mentioned concerning the simplification and speeding up of the processing time, also offers other advantages, enabling requirements to be met for increased wear resistance and belt life, giving it high mechanical characteristics.

The final result of the junction is shown in Figure 3, where an example of a closed loop belt is shown, in which the junction of the two ends is made according to the invention.

According to the invention, a further step may be envisaged to conclude the work cycle, which consists of subjecting at least the area of the joint 4 to a pressing action at a predetermined temperature, once the closing band 7 that closes the transverse holes or hollow seats 5 in which the pins 6 are housed has been firmly applied.

This step has the purpose of increasing the bond between the various parts and therefore to strengthen the junction.

According to a further embodiment, not shown in the accompanying Figures, the closing band 7 may itself consist of a toothed belt which therefore has a positive toothing, for example, provided for meshing with an external toothed member, at least on the side opposite to the side with which the closing band 7 is coupled to the tooth heads of the belt 1.

According to a further embodiment, the holes 5 can be generated directly and at the same time as the extrusion moulding operation of the belt 8.

## Claims

1. Method for joining belts, whose ends to be joined are provided with transversal holes (5) at least along the junction area for housing suitable reinforcing pins (6), **characterized in that** the transversal holes (5), in its final configuration, are formed by using a common toothed belt (8) on a toothed side of which a closing band or belt (7) is firmly arranged and coupled in a stable manner, with the task of covering the grooves between the teeth of the toothed belt (8) thus forming a plurality of transversal holes (5); said transversal holes (5) having such a dimension and being so used as to house suitable pins (6) inside them, which pins are arranged at least in the junction area (4) of the ends of the belt (1) to be joined.

2. Method according to claim 1, **characterized by the fact that it also includes:**
cutting the belt into shaped projecting belt portions (2) at both ends to be joined arranged so that the externally projecting belt portions (2) of the one are suitably accommodated in corresponding recesses (3) included between the projecting belt portions of the other one, so as to form a sort of longitudinal interlock thus defining a junction area or region (4) with predetermined length; it being provided that, while coupling the externally projecting portions of the two ends, the individual transversal holes or hollow seats (5) are aligned for the entire width of said junction area or region (4);
introducing a pin (6) into each one of said transverse holes (5).

3. Method according to claim 1, **characterized in that** said closing band (7) is made of materials endowed with mechanical deformability and elasticity characteristics compatible with those of the toothed belts (8).

4. Method according to claim 1, **characterized in that** the toothed belts (8) have transverse toothings also on the side opposite to that to the side having the closing band (7) applied thereto.

5. Method according to any one of the previous claims, **characterized in that** it comprises a step in which at least said junction region (4) is subjected to a pressing action at a predetermined temperature once the closing band (7) has been applied firmly and covers the transverse holes (5) in which said pins (6) are housed.

6. Method according to any one of the previous claims, **characterized in that** the ends to be joined have ends consisting of shaped, projecting belt portions (2) arranged in a complementary manner, so that the externally projecting portions (2) of the one are suitably accommodated into corresponding recesses (3) included between the projecting portions of the other one, so as to form a sort of longitudinal interlock thus defining a junction area or region (4) with predetermined length; the single said transversal holes (5) of said externally projection portions (2), being aligned and arranged parallel to each other in order to accommodate pins (6).

7. Use of a toothed belt (8) on a toothed side of which that is provided with teeth separated from one another by grooves, a closing band or belt (7) is solidly arranged and applied in a firm manner, with the task of covering the grooves between the teeth, thus producing a plurality of transversal holes (5) designed to receive pins (6) thereinside, these pins being arranged along a junction area (4) of the belt.

## Patentansprüche

1. Verfahren zum Verbinden von Riemen, deren zu verbindende Enden zumindest entlang des Verbindungsbereichs mit quer verlaufenden Löchern (5) zur Aufnahme geeigneter Verstärkungsstifte (6) versehen sind, die **dadurch gekennzeichnet, dass** die quer verlaufenden Löcher (5) in ihrer endgültigen Konfiguration durch Verwendung eines gemeinsamen Zahnriemens (8) gebildet werden, auf dessen gezahnter Seite ein Schließband oder -riemen (7) fest angebracht und stabil befestigt ist, der die Aufgabe hat, die Rillen zwischen den Zähnen des Zahnriemens (8) abzudecken, wodurch eine Vielzahl von quer verlaufenden Löchern (5) gebildet wird und diese quer verlaufenden Löcher (5) eine solche Abmessung haben und so verwendet werden, dass sie geeignete Stifte (6) in ihrem Inneren aufnehmen, wobei die Stifte zumindest im Verbindungsbereich (4) der Enden des zu verbindenden Riemens (1) angeordnet werden.

2. Verfahren nach Patentanspruch 1, **dadurch gekennzeichnet, dass es außerdem umfasst:**
das Schneiden des Riemens in geformte, überstehende Riemenabschnitte (2) an beiden zu verbindenden Enden, die so angeordnet sind, dass die nach außen überstehenden Riemenabschnitte (2) des einen Riemens auf geeignete Weise in entsprechenden Aussparungen (3) aufgenommen werden, die zwischen den überstehenden Riemenabschnitten des anderen Riemens eingeschlossen werden, um eine Art Verriegelung in Längsrichtung zu bilden, wodurch ein Verbindungsbereich oder - stück (4) mit bestimmter Länge entsteht; wobei vorgesehen ist, dass beim Verbinden der nach außen überstehenden Abschnitte der beiden Enden die einzelnen quer verlaufenden Löcher oder hohlen Aufnahmen (5) über die gesamte Breite des genannten Verbindungsbereichs oder -stücks (4) ausgerichtet sind;
Einführen eines Stifts (6) in jedes der quer verlaufenden Löcher (5).

3. Verfahren nach Patentanspruch 1, **dadurch gekennzeichnet, dass** das Verschlussband (7) aus Materialien besteht, die über Eigenschaften mechanischer Verformbarkeit und Elastizität verfügen, die mit denen der Zahnriemen (8) kompatibel sind.

4. Verfahren gemäß Patentanspruch 1, **dadurch gekennzeichnet, dass** die Zahnriemen (8) auch auf der Seite mit dem angebrachten Verschlussband (7) gegenüberliegenden Seite zu der Seite Querverzahnungen aufweisen.

5. Verfahren nach einem der vorhergehenden Patentansprüche, **dadurch gekennzeichnet, dass** es einen Arbeitsschritt umfasst, bei dem zumindest der genannte Verbindungsbereich (4) einer Presswirkung bei einer festgelegten Temperatur ausgesetzt wird, nachdem das Verschlussband (7) fest angebracht wurde und die quer verlaufenden Löcher (5) bedeckt, in denen die Stifte (6) eingeschoben wurden.

6. Verfahren nach einem der vorhergehenden Patentansprüche, **dadurch gekennzeichnet, dass** die zu verbindenden Riemenenden Enden aufweisen, die aus geformten, überstehenden Riemenabschnitten (2) bestehen, die komplementär angeordnet sind, so dass die nach außen überstehenden Abschnitte (2) des einen Endes geeignet sind, in die entsprechenden Aussparungen (3) zwischen den überstehenden Abschnitten des anderen Endes zu greifen, um eine Art Verriegelung in Längsrichtung zu bilden, wodurch ein Verbindungsbereich oder -stück (4) mit vorbestimmter Länge entsteht; wobei die einzelnen quer verlaufenden Löcher (5) der nach außen überstehenden Abschnitte (2) zueinander ausgerichtet sind und parallel zueinander verlaufen, um die Stifte (6) aufzunehmen.

7. Verwendung eines Zahnriemens (8), auf dessen gezahnter Seite, die mit durch Rillen voneinander getrennten Zähnen versehen ist, ein Schließband oder -riemen (7) fest angeordnet und angebracht ist, der die Aufgabe hat, die Rillen zwischen den Zähnen abzudecken, wodurch eine Vielzahl von quer verlaufenden Löchern (5) entsteht, die dazu dienen, darin Stifte (6) aufzunehmen, wobei diese Stifte entlang eines Verbindungsbereichs (4) des Riemens angeordnet sind.

## Revendications

1. Procédé pour joindre des courroies, dont les extrémités à joindre sont pourvues de trous transversaux (5) au moins le long de la zone de jonction pour loger des broches de renforcement appropriées (6), **caractérisé en ce que** les trous transversaux (5), dans leur configuration finale, sont formés en utilisant une courroie dentée commune (8) sur un côté denté de laquelle une bande ou courroie de fermeture (7) est fermement disposée et couplée de manière stable, avec la tâche de couvrir les rainures entre les dents de la courroie dentée (8) formant ainsi une pluralité de trous transversaux (5), lesdits trous transversaux (5) ayant une dimension telle et étant utilisés de manière à loger des broches appropriées (6) à l'intérieur de ceux-ci, lesquelles broches sont disposées au moins dans la zone de jonction (4) des extrémités de la courroie (1) à joindre.

2. Procédé selon la revendication 1, **caractérisé par le fait qu'il comprend également :**
découper la courroie en portions de courroie en saillie façonnées (2) aux deux extrémités à joindre, disposées de telle sorte que les portions de courroie en saillie vers l'extérieur (2) de l'une soient convenablement logées dans des évidements correspondants (3) inclus entre les portions de courroie en saillie de l'autre, de manière à former une sorte de verrouillage longitudinal définissant ainsi une zone ou région de jonction (4) d'une longueur prédéterminée ; il est prévu que, lors de l'accouplement des parties en saillie vers l'extérieur des deux extrémités, les trous transversaux individuels ou les sièges creux (5) soient alignés sur toute la largeur de ladite zone ou région de jonction (4) ;
introduire une broche (6) dans chacun desdits trous transversaux (5).

3. Procédé selon la revendication 1, **caractérisé en ce que** ladite bande de fermeture (7) est réalisée en matériaux dotés de caractéristiques de déformabilité mécanique et d'élasticité compatibles avec celles des courroies dentées (8).

4. Procédé selon la revendication 1, **caractérisé en ce que** les courroies dentées (8) ont des dentures transversales également sur le côté opposé à celui sur lequel est appliquée la bande de fermeture (7).

5. Procédé selon l'une quelconque des revendications précédentes, **caractérisé en ce qu'**il comprend une étape dans laquelle au moins ladite région de jonction (4) est soumise à une action de pressage à une température prédéterminée une fois que la bande de fermeture (7) a été appliquée fermement et recouvre les trous transversaux (5) dans lesquels sont logées lesdites broches (6).

6. Procédé selon l'une quelconque des revendications précédentes, **caractérisé en ce que** les extrémités à joindre ont des extrémités constituées de portions de ceinture (2) en saillie, façonnées, disposées de manière complémentaire, de sorte que les portions en saillie vers l'extérieur (2) de l'une sont convenablement logées dans des évidements correspondants (3) inclus entre les portions en saillie de l'autre, de manière à former une sorte de verrouillage longitudinal définissant ainsi une zone ou région de jonction (4) d'une longueur prédéterminée ; lesdits trous transversaux uniques (5) desdites parties en saillie vers l'extérieur (2), étant alignés et disposés parallèlement les uns aux autres afin de recevoir des broches (6).

7. Utilisation d'une courroie dentée (8), sur un côté denté de laquelle, muni de dents séparées les unes des autres par des rainures, une bande ou courroie de fermeture (7) est solidement disposée et appliquée de manière ferme, avec pour tâche de couvrir les rainures entre les dents, produisant ainsi une pluralité de trous transversaux (5) conçus pour recevoir des broches (6) à l'intérieur, ces broches étant disposées le long d'une zone de jonction (4) de la courroie.
